# EUROPEAN PATENT APPLICATION

(11) **EP 2 500 540 A1**
(43) Date of publication of application: **19.09.2012**
(21) Application number: 10829818.3
(22) Date of filing: 14.10.2010
(51) Int. Cl.: F01P 3/20, F01P 7/16, F02N 19/10

(54) **THERMAL STORAGE SYSTEM AND METHOD FOR CONTROLLING SAME**

(30) Priority: 13.11.2009 JP 2009259826
(71) Applicant: Calsonic Kansei Corporation, Saitama-shi Saitama 331-8501 (JP)
(72) Inventor: MATSUDAIRA, Norimitsu, Saitama-shi Saitama 331-8501 (JP); KAWAKAMI, Hironobu, Saitama-shi Saitama 331-8501 (JP)
(74) Representative: Grünecker, Kinkeldey, Stockmair & Schwanhäusser
(86) International application number: PCT/JP2010/068539
(87) International publication number: WO 2011/058858

(57) **Abstract**

In the case of storing cooling water in a heat storage tank, the cooling water is injected into the heat storage tank from a cooling water circuit and the heat storage tank is preheated by the cooling water injected into the heat storage tank. After the preheating is completed, the cooling water is re-injected into the heat storage tank from the cooling water circuit, the cooling water in the heat storage tank reduced in temperature by the preheating is returned to the cooling water circuit, and the re-injected cooling water is stored in the heat storage tank.

## Description

### TECHNICAL FIELD

The present invention relates to a heat storage system of an engine.

### BACKGROUND ART

There is known a technology for shortening a time required to increase the temperature of cooling water (engine warm-up time) by storing the cooling water increased in temperature due to the operation of an engine in a heat storage tank having a heat insulating structure and returning the cooling water stored in the heat storage tank to a cooling water circuit at the time of a cold start. According to this technology, fuel economy performance and exhaust performance of the engine can be improved.

High-temperature cooling water is stored in the heat storage tank by discharging low-temperature cooling water originally stored in the heat storage tank while injecting high-temperature cooling water into the heat storage tank, thereby totally replacing the cooling water in the heat storage tank by the high-temperature cooling water. In JP2004-11572A, a time required to replace the cooling water is calculated from the rotational speed of the engine and the replacement of the cooling water is finished when the calculated time elapses.

### SUMMARY OF INVENTION

However, mere replacement of the cooling water in the heat storage tank by the high-temperature cooling water leads to a problem that the temperature of the cooling water to be stored in the heat storage tank becomes lower than that of the cooling water injected into the heat storage tank. This is because, if the high-temperature cooling water is injected into the heat storage tank, a part of thermal energy of the high-temperature cooling water is used to increase the temperature of the heat storage tank and the temperature of the injected cooling water is reduced.

The present invention aims to enable storage of higher-temperature cooling water in a heat storage tank in a heat storage system of an engine.

One aspect of the present invention is directed to a heat storage system, comprising a heat storage tank which has a heat insulating structure and is connected to a cooling water circuit of an engine; a switching valve which is provided between the heat storage tank and the cooling water circuit and switched to an injection side and a stop side to inject and stop injecting cooling water into the heat storage tank from the cooling water circuit; a preheating unit which injects the cooling water into the heat storage tank from the cooling water circuit by switching the switching valve to the injection side and preheats the heat storage tank by the cooling water injected into the heat storage tank in the case of storing the cooling water in the heat storage tank; and a heat storage unit which re-injects the cooling water into the heat storage tank from the cooling water circuit, returns the cooling water in the heat storage tank reduced in temperature by the preheating to the cooling water circuit and stores the re-injected cooling water in the heat storage tank by switching the switching valve to the stop side after the preheating is completed.

Another aspect of the present invention is directed to a control method for a heat storage system having a heat insulating structure and including a heat storage tank connected to a cooling water circuit of an engine, comprising a step of injecting the cooling water into the heat storage tank from the cooling water circuit and preheating the heat storage tank by the cooling water injected into the heat storage tank in the case of storing the cooling water in the heat storage tank; and a step of re-injecting the cooling water into the heat storage tank from the cooling water circuit, returning the cooling water in the heat storage tank reduced in temperature by the preheating to the cooling water circuit and storing the re-injected cooling water in the heat storage tank after the preheating is completed.

According to these aspects, since the heat storage tank is preheated, a temperature drop of the re-injected cooling water can be suppressed and high-temperature cooling water can be stored in the heat storage tank.

An embodiment of the present invention and advantages thereof are described in detail below with reference to the accompanying drawings.

### BRIEF DESCRIPTION OF DRAWINGS

FIG. 1 is a schematic construction diagram of a heat storage system according to an embodiment of the present invention.

FIG. 2 is a flow chart showing control contents of a controller.

FIG. 3 is a partial modification of the flow chart showing the control contents of the controller.

FIG. 4 is a partial modification of the flow chart showing the control contents of the controller.

FIG. 5 shows a partial modification of the heat storage system.

### DESCRIPTION OF EMBODIMENTS

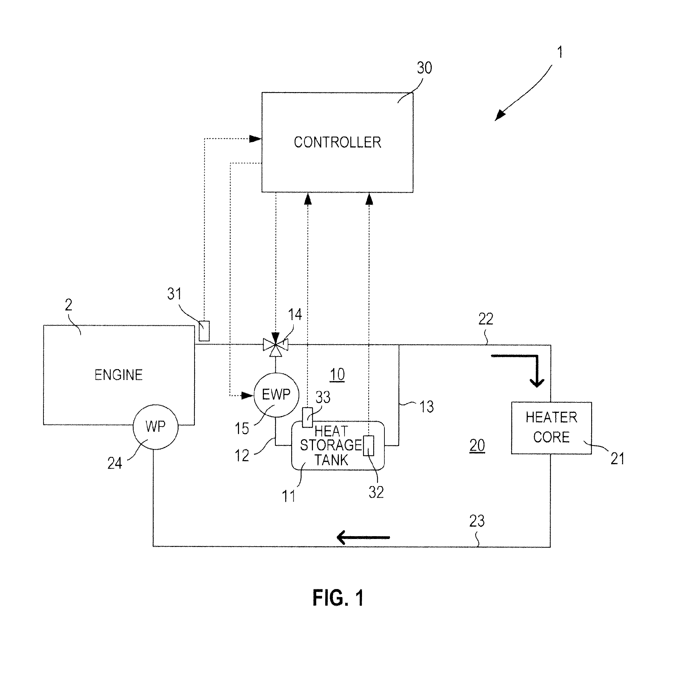

FIG. 1 shows a schematic construction of a heat storage system 1 according to an embodiment of the present invention. In this example, the heat storage system 1 is provided in a heater circuit 20 for heating air for air conditioning utilizing heat of cooling water of an engine 2.

First, the heater circuit 20 is described.

The heater circuit 20 includes a heater core 21 arranged in a duct of an air conditioner, a first flow path 22 connecting the entrance of the heater core 21 and the engine 2, a second flow path 23 connecting the exit of the heater core 21 and the engine 2, and a water pump 24 ("WP" in FIG. 1) provided at a position where the engine 2 and the second flow path 23 are connected. A first temperature sensor 31 for detecting a temperature (hereinafter, referred to as an "engine exit water temperature") Te of cooling water coming out of the engine 2 is mounted at a position where the engine 2 and the first flow path 22 are connected.

The water pump 24 is driven by the power of the engine 2 and circulates the cooling water in the heater circuit 20. The cooling water coming out of the engine 2 flows into the heater core 21 via the first flow path 22 and heats the air for air conditioning by a heat exchange between the cooling water and the air for air conditioning flowing in the duct of the air conditioner. The cooling water after the heat exchange is returned to the engine 2 via the second flow path 23.

Next, the heat storage system 1 is described.

The heat storage system 1 includes a heat storage circuit 10 and a controller 30.

The heat storage circuit 10 includes a heat storage tank 11, a first branch path 12 branched off from the first flow path 22 and connected to the entrance of the heat storage tank 11, a second branch path 13 branched off at a downstream side of the first branch path 12 (closer to the heater core 21) and connected to the exit of the heat storage tank 11, a three-way valve 14 provided at a position where the first flow path 22 and the first branch path 12 are connected, and an electric water pump 15 ("EWP" in FIG. 1) at an intermediate position of the first branch path 12.

The heat storage tank 11 is a container having a heat insulating structure and can store cooling water inside. Although not shown, the heat insulating structure may be a structure for covering the heat storage tank 11 by an outer container and vaccumizing a space between the heat storage tank 11 and the outer container or may be a structure for covering the outer peripheral surface of the heat storage tank 11 by a heat insulating material. A second temperature sensor 32 for detecting a temperature (hereinafter, referred to as an "in-tank water temperature") Thw of the cooling water in the heat storage tank 11 and a third temperature sensor 33 for detecting a temperature (hereinafter, referred to as a "tank temperature") Tht of a container part constituting the heat storage tank 11 are mounted on the heat storage tank 11.

The three-way valve 14 is a switching valve which is switched to inject and stop injecting the cooling water into the heat storage tank 11 from the heater circuit 20 and, for example, an electromagnetic valve. The three-way valve 14 can be switched at least to a state where the cooling water from the engine 2 is caused to flow into the first branch path 12, flow through the heat storage tank 11 and then flow into the heater core 21 (hereinafter, referred to as an "injection side") and a state where the first branch path 12 is cut off and the cooling water is caused to flow into the heater core 21 without flowing through the heat storage tank 11 (hereinafter, referred to as a "stop side").

When the three-way valve 14 is switched to the injection side and the electric water pump 15 is actuated, the cooling water is injected into the heat storage tank 11 and the cooling water stored in the heat storage tank 11 thus far is discharged from the heat storage tank 11 and returned to the first flow path 22. In this way, the cooling water in the heat storage tank 11 can be replaced by the cooling water in the heater circuit 20.

The controller 30 includes a CPU for performing various operations, a storage device (RAM, ROM) storing a control program to be described later and an input/output interface, and is electrically connected to the first to third temperature sensors 31 to 33, the three-way valve 14 and the electric water pump 15 via the input/output interface.

The controller 30 switches the three-way valve 14 and actuates and stops the electric water pump 15 during the operation of the engine 2 based on detection signals of the first to third temperature sensors 31 to 33 and the like, so that the cooling water increased in temperature by the operation of the engine 2 is stored in the heat storage tank 11. When the engine 2 is started in a cold state (at the time of a cold start), the high-temperature cooling water stored in the heat storage tank 11 is conversely returned to the heater circuit 20, thereby shortening a warm-up time of the engine 2 and improving fuel economy performance and exhaust performance of the engine 2.

Further, if the tank temperature Tht is low when the high-temperature cooling water is injected and stored in the heat storage tank 11, thermal energy of the injected cooling water is consumed to increase the temperature of the heat storage tank 11 and the high-temperature cooling water cannot be stored in the heat storage tank 11. In view of this, in this embodiment, a preheating process of preheating the heat storage tank 11 utilizing the high-temperature cooling water is first performed in the case of injecting and storing the high-temperature cooling water in the heat storage tank 11. After the preheating of the heat storage tank 11 is completed, the high-temperature cooling water is re-injected into the heat storage tank 11 so that the high-temperature cooling water is stored in the heat storage tank 11.

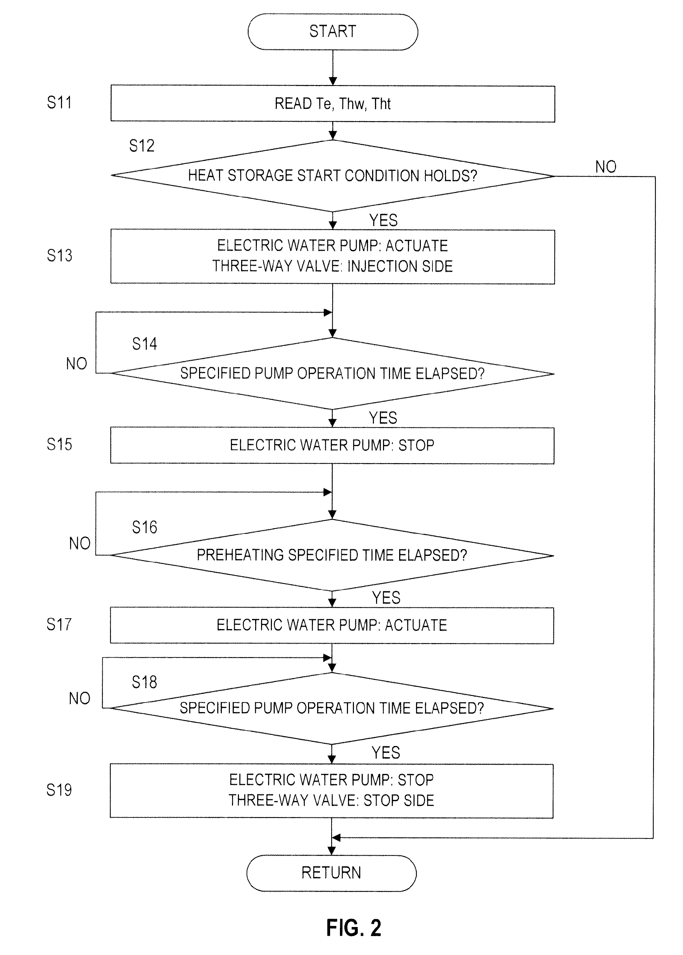

FIG. 2 is a flow chart showing control contents of the controller 30. This flow chart is repeatedly executed during the operation of the engine 2. Hereinafter, the operation of the heat storage system 1 according to this embodiment is described in detail with reference to this flow chart.

In S11, the controller 30 reads the engine exit water temperature Te, the in-tank water temperature Thw and the tank temperature Tht.

In S12, the controller 30 judges whether or not a heat storage start condition holds. The heat storage start condition is judged to hold when the engine exit water temperature Te is higher than a first threshold value and the in-tank water temperature Thw is lower than a second threshold value. The first threshold value is a temperature threshold value for judging whether or not the warm-up of the engine 2 has been completed and, for example, set at 85°C. Further, the second threshold value is a temperature threshold value for judging whether or not the in-tank water temperature Thw has dropped to such a degree as to require replacement and, for example, set at 70°C. The process proceeds to S 13 if the heat storage start condition is judged to hold, whereas the process ends if it is judged not to hold.

In S 13 to S 16, the preheating process of preheating the heat storage tank 11 utilizing the high-temperature cooling water is performed.

In S13, the controller 30 actuates the electric water pump 15 and switches the three-way valve 14 to the injection side. In this way, the high-temperature cooling water is injected into the heat storage tank 11 and low-temperature cooling water stored in the heat storage tank 11 thus far is discharged to the heater circuit 20.

In S14, the controller 30 measures an elapsed time from the start of the injection of the high-temperature cooling water into the heat storage tank 11 in S13 and judges whether or not the elapsed time has exceeded a specified pump operation time. The specified pump operation time is a time required to totally replace the low-temperature cooling water stored in the heat storage tank 11 thus far by the newly injected high-temperature cooling water by injecting the high-temperature cooling water into the heat storage tank 11.

The specified pump operation time is determined by the volume of the heat storage tank 11 and the discharge rate of the electric water pump 15. If the volume of the heat storage tank 11 and the discharge rate of the electric water pump 15 are fixed values, the specified pump operation time is also a fixed value. The process proceeds to S15 if the elapsed time is judged to have exceeded the specified pump operation time, whereas the processing of S 14 is repeated if it is judged not to have exceeded the specified pump operation time.

In S 15, the controller 30 stops the electric water pump 15.

In S16, the controller 30 measures an elapsed time from the stop of the electric water pump 15 in S15 and judges whether or not the elapsed time has exceeded a specified preheating time. The specified preheating time is a time required for the tank temperature Tht to increase and exceed a third threshold value after the cooling water in the heat storage tank 11 is totally replaced by the high-temperature cooling water. The third threshold value is a temperature threshold value for judging whether or not the heat storage tank 11 has been sufficiently heated and, for example, set at 70°C. The specified preheating time is determined by the initial temperature of the heat storage tank 11, the volume and heat capacity of the heat storage tank 11, the temperature of the cooling water injected into the heat storage tank 11 and the like. Thus, the specified preheating time is preferably a variable value, but may be a fixed value to simplify the control. The process proceeds to S17 if the elapsed time is judged to have exceeded the specified preheating time in S16, whereas the processing of S16 is repeated if it is judged not to have exceeded the specified preheating time.

In S17 to S19, a heat storage process of injecting and storing the high-temperature cooling water into the preheated heat storage tank 11 is performed.

In S 17, the controller 30 actuates the electric water pump 15. Since the three-way valve 14 is already switched to the injection side in S13, the injection of the high-temperature cooling water into the heat storage tank 11 is resumed and the cooling water reduced in temperature due to the preheating in the heat storage tank 11 is discharged to the heater circuit 20 when the electric water pump 15 is actuated.

In S 18, the controller 30 measures an elapsed time from the resumption of the injection of the high-temperature cooling water into the heat storage tank 11 in S17 and judges whether or not the elapsed time has exceeded a specified pump operation time. Since the specified pump operation time is the same value as the one used in S 14, the cooling water in the heat storage tank 11 used to preheat the heat storage tank 11 and reduced in temperature is totally replaced by the high-temperature cooling water when the elapsed time exceeds the specified pump operation time. At this time, since the preheating of the heat storage tank 11 is already completed, a temperature drop of the cooling water newly injected into the heat storage tank 11 is small and the heat storage tank 11 is filled with the high-temperature cooling water. The process proceeds to S 19 if the elapsed time is judged to have exceeded the specified pump operation time, whereas the processing of S 18 is repeated if it is judged not to have exceeded the specified pump operation time.

In S19, the controller 30 finishes the process by stopping the electric water pump 15 and switching the three-way valve 14 to the stop side. At this point of time, the high-temperature cooling water is stored in the heat storage tank 11.

Thus, according to the above control, the heat storage tank 11 is first preheated in the case of storing the cooling water in the heat storage tank 11. The preheating of the heat storage tank 11 is performed by replacing the cooling water in the heat storage tank 11 by the high-temperature cooling water (S13 to S 15) and then waiting until the heat storage tank 11 is heated (S 14).

After the preheating of the heat storage tank 11 is completed, the high-temperature cooling water is re-injected into the heat storage tank 11 and the cooling water in the heat storage tank 11 used in the preheating process and reduced in temperature is totally replaced by the high-temperature cooling water (S17 to S 19). Since the heat storage tank 11 is preheated, a temperature drop of the cooling water newly injected into the heat storage tank 11 is small and the high-temperature cooling water can be stored in the heat storage tank 11.

Although whether or not the preheating of the heat storage tank 11 has been completed is judged based on the elapsed time from the injection of the cooling water into the heat storage tank 11 (S16) in this embodiment, it may be directly judged based on the tank temperature Tht. This enables the completion of the preheating of the heat storage tank 11 to be judged with higher accuracy.

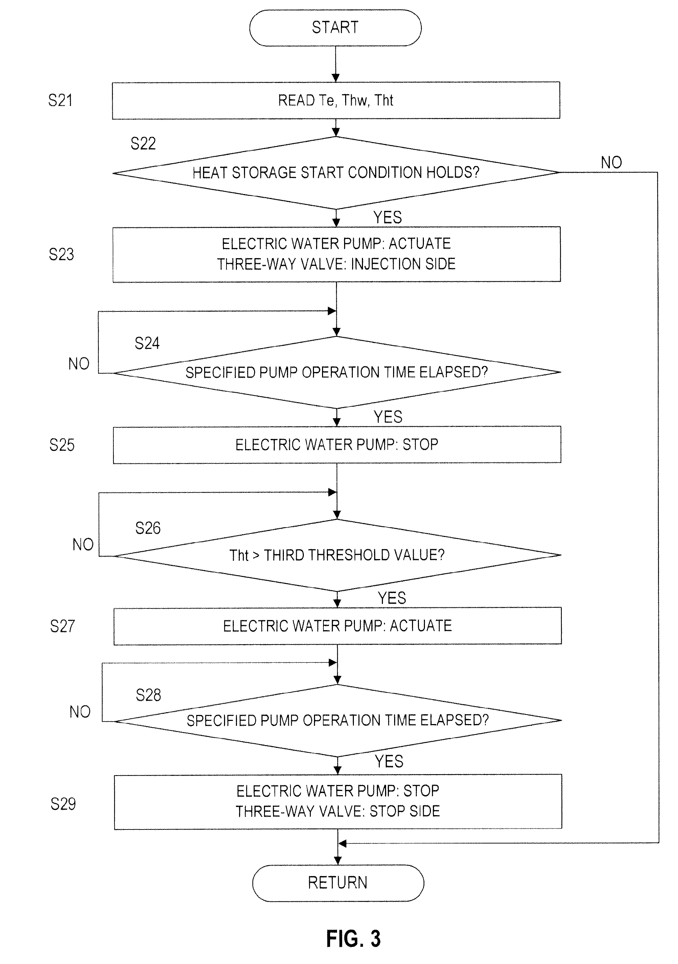

FIG. 3 is a flow chart showing control contents of such a modification.

This is described. S21 to S25 are the same processings as those of S 11 to S 15 of FIG. 2 and the injection of high-temperature cooling water into the heat storage tank 11 is started to preheat the heat storage tank 11 when the heat storage start condition holds.

In S26, the controller 30 judges whether or not the preheating of the heat storage tank has been completed. In this example, the controller 30 newly obtains the tank temperature Tht, judges that the preheating of the heat storage tank 11 has been completed when the tank temperature Tht exceeds the third threshold value, and proceeds to the heat storage process in and after S27. This flow chart differs from the one shown in FIG. 2 only in this point. The third threshold value is a temperature threshold value for judging whether or not the heat storage tank 11 has been sufficiently heated and, for example, set at 70°C.

S27 to S29 are the same processings as those of 17 to S19 of FIG. 2 and the high-temperature cooling water is re-injected into the heat storage tank 11 and the high-temperature cooling water is stored in the heat storage tank 11.

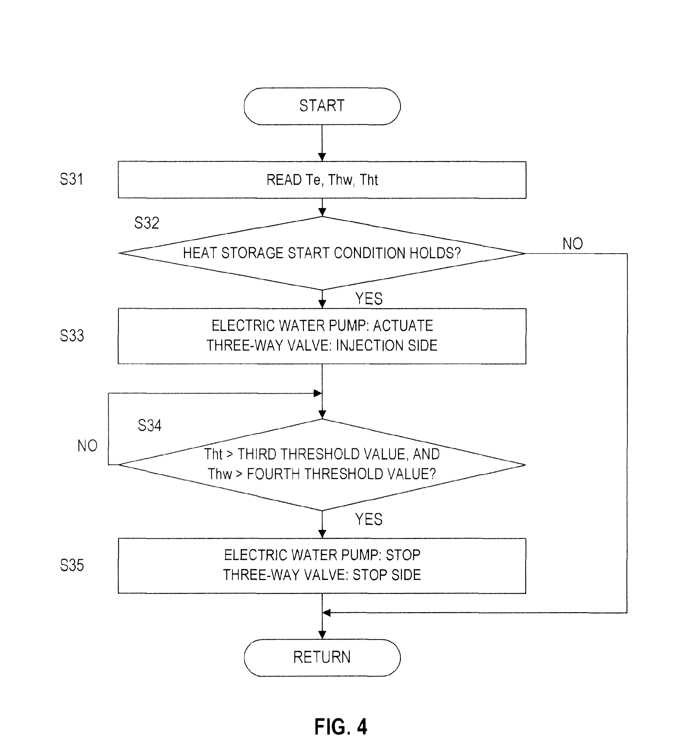

Alternatively, as in a modification of FIG. 4, it is also possible to perform the preheating process and the heat storage process together.

This is described. S31 to S33 are the same processings as those of S 11 to S13 of FIG. 2 and the injection of high-temperature cooling water into the heat storage tank 11 is started when the heat storage start condition holds.

In S34, the controller 30 newly obtains the tank temperature Tht and the in-tank water temperature Thw and judges whether or not the tank temperature Tht is higher than the third threshold value and whether or not the in-tank water temperature Thw is higher than a fourth threshold value. While the tank temperature Tht is lower than the third threshold value, S34 is repeated and the injection of the high-temperature cooling water into the heat storage tank 11 is continued to preheat the heat storage tank 11.

The third threshold value is a temperature threshold value for judging whether or not the heat storage tank 11 has been sufficiently heated and, for example, set at 70°C. The fourth threshold value is a threshold value for judging whether or not the heat storage has been completed, i.e. whether or not the high-temperature cooling water in the heat storage tank 11 has been replaced by the high-temperature cooling water, and set at a temperature substantially equal to or slightly lower than the engine exit water temperature Te, for example, 85°.

If the in-tank water temperature Thw is lower than the fourth threshold value even though the tank temperature Tht is higher than the third threshold value, the cooling water in the heat storage tank 11 is not totally replaced by the high-temperature cooling water, wherefore the processing of S34 is repeated to continue the injection of the high-temperature cooling water into the heat storage tank 11.

Finally when the tank temperature Tht exceeds the third threshold value and the in-tank water temperature Thw exceeds the fourth threshold value, the process proceeds to S35 and the controller 30 stops the electric water pump 15 and switches the three-way valve 14 to the stop side. In this way, the high-temperature cooling water is stored in the heat storage tank 11.

Accordingly, in the modification of FIG. 4, the high-temperature cooling water is continuously injected into the heat storage tank 11 during the preheating process and the re-injection of the high-temperature cooling water by the heat storage process is uninterruptedly continued after the preheating of the heat storage tank 11 is completed. There is an advantage of simplifying control contents since the electric water pump 15 is not repeatedly actuated and stopped and shortening the time required for the preheating since the high-temperature cooling water is continuously injected during the preheating process.

Although the embodiment of present invention has been described above, the technical scope of the present invention is not limited to the specific construction of the above embodiment.

For example, although the cooling water in the heat storage tank 11 is replaced by the high-temperature cooling water only once in the preheating process in the controls shown in FIGS. 2 and 3, the heat storage process may be performed after the cooling water is replaced a plurality of times or the high-temperature cooling water may be continuously supplied during the preheating process as in the modification of FIG. 4.

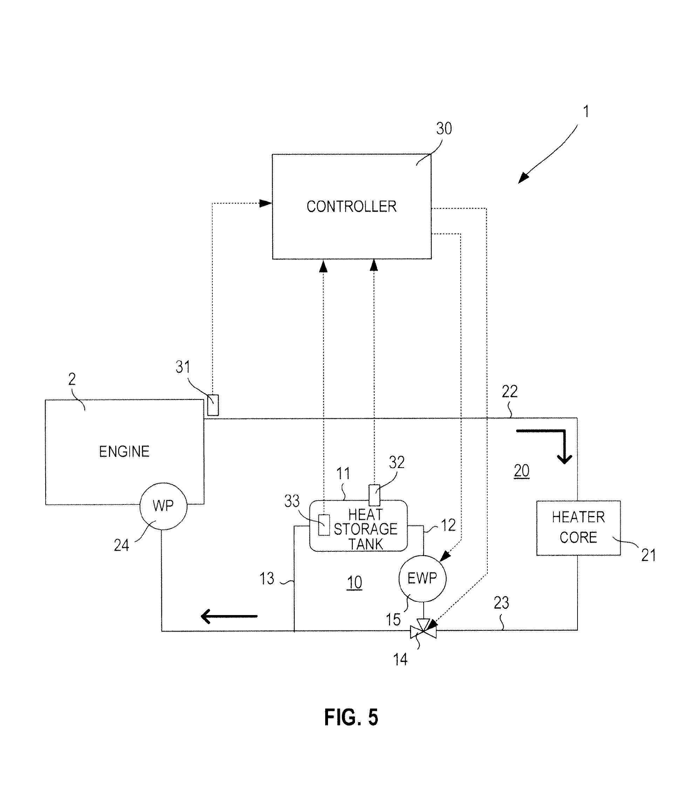

Further, although the heat storage circuit 10 is connected to the first flow path 22 in the above embodiment, it only has to be connected at a position where the high-temperature cooling water can be obtained. For example, the heat storage circuit 10 may be connected to the second flow path 23 as shown in FIG. 5 or may be connected not to the heater circuit 20, but to a flow path connecting the engine 2 and an unillustrated radiator.

Further, although the above control is executed during the operation of the engine 2 in the above embodiment, the execution timing of the above control is not limited to during the operation of the engine 2. For example, even if the engine 2 is in a stopped state, the above control is possible if the temperature of the cooling water in the heater circuit 20 is sufficiently high.

If the above control is executed during the operation of the engine 2, it is also possible to omit the electric water pump 15 and replace the cooling water stored in the heat storage tank 11 utilizing the water pump 24 driven by the power of the engine 2. In this case, in order to inject the cooling water into the heat storage tank 11, it is sufficient only to switch the three-way valve 14 to the injection side. However, since the discharge rate of the water pump 24 varies according to the rotational speed of the engine 2, the specified time is made variable according to the rotational speed of the engine 2 or a time with a sufficient margin is set during the replacement.

The present application claims a priority based on Japanese Patent Application No. 2009-259826 filed with the Japan Patent Office on November 13, 2009, all the contents of which are hereby incorporated by reference.

## Claims

1. A heat storage system (1), comprising:
a heat storage tank (11) which has a heat insulating structure and is connected to a cooling water circuit (20) of an engine (2);
a switching valve (14) which is provided between the heat storage tank (11) and the cooling water circuit (20) and switched to an injection side and a stop side to inject and stop injecting cooling water into the heat storage tank (11) from the cooling water circuit (20);
a preheating unit (30) which injects the cooling water into the heat storage tank (11) from the cooling water circuit (20) by switching the switching valve (14) to the injection side and preheats the heat storage tank (11) by the cooling water injected into the heat storage tank (11) in the case of storing the cooling water in the heat storage tank (11); and
a heat storage unit (30) which re-injects the cooling water into the heat storage tank (11) from the cooling water circuit (20), returns the cooling water in the heat storage tank (11) reduced in temperature by the preheating to the cooling water circuit (20) and stores the re-injected cooling water in the heat storage tank (11) by switching the switching valve (14) to the stop side after the preheating is completed.

2. The heat storage system (1) according to claim 1, further comprising a preheating completion determining unit (30) for determining the completion of the preheating based on an elapsed time from the start of the injection of the cooling water into the heat storage tank (11) from the cooling water circuit (20) by the preheating unit (30), wherein:
the heat storage unit (30) starts re-injecting the cooling water into the heat storage tank (11) from the cooling water circuit (20) when the completion of the preheating is determined by the preheating completion determining unit (30).

3. The heat storage system (1) according to claim 1, further comprising a preheating completion determining unit (30) for determining the completion of the preheating based on the temperature of the heat storage tank (11), wherein:
the heat storage unit (30) starts re-injecting the cooling water into the heat storage tank (11) from the cooling water circuit (20) when the completion of the preheating is determined by the preheating completion determining unit (30).

4. The heat storage system (1) according to claim 1, wherein:
the preheating unit (30) continuously injects the cooling water into the heat storage tank (11) from the cooling water circuit (20) until the preheating of the heat storage tank (11) is completed; and
the re-injection of the cooling water into the heat storage tank (11) from the cooling water circuit (20) by the heat storage unit (30) is uninterruptedly continued following the injection of the cooling water into the heat storage tank (11) from the cooling water circuit (20) by the preheating unit (30).

5. A control method for a heat storage system (1) having a heat insulating structure and including a heat storage tank (11) connected to a cooling water circuit (20) of an engine (2), comprising:
a step (S 13, S23, S33) of injecting the cooling water into the heat storage tank (11) from the cooling water circuit (20) and preheating the heat storage tank (11) by the cooling water injected into the heat storage tank (11) in the case of storing the cooling water in the heat storage tank (11); and
a step (S17, S27, S33) of re-injecting the cooling water into the heat storage tank (11) from the cooling water circuit (20), returning the cooling water in the heat storage tank (11) reduced in temperature by the preheating to the cooling water circuit (20) and storing the re-injected cooling water in the heat storage tank (11) after the preheating is completed.
